# EUROPÄISCHE PATENTSCHRIFT

(11) **EP 1 209 043 B1**
(45) Veröffentlichungstag und Bekanntmachung des Hinweises auf die Patenterteilung: **03.09.2003**
(21) Anmeldenummer: 00125730.2
(22) Anmeldetag: 24.11.2000
(51) Int. Cl.: B60R 21/18, B60R 21/22

(54) **Insassenschutzvorrichtung mit einem auf einem Gurtabschnitt eines Sicherheitsgurtsystems positionierten Gassack**
Passenger protection device with an airbag positioned on a safety belt portion
Disposition de protection de passagers comportant un coussin gonflable positionné sur un brin de ceinture de sécurité

(43) Veröffentlichungstag der Anmeldung: 29.05.2002
(73) Patentinhaber: AUTOLIV DEVELOPMENT AB, 447 83 Vargarda (SE)
(72) Erfinder: Rösch, Franz, 85221 Dachau (DE); Tiefenthaler, Peter, 80689 München (DE); Sven, Rau, 80689 München (DE)
(74) Vertreter: Müller, Karl-Ernst, Dr., Dipl.-Ing.

(56) Entgegenhaltungen:
- EP-A- 0 592 815
- DE-U- 29 821 278
- PATENT ABSTRACTS OF JAPAN vol. 2000, no. 08, 6. Oktober 2000 (2000-10-06) & JP 2000 142303 A (TOYOTA MOTOR CORP), 23. Mai 2000 (2000-05-23)

## Beschreibung

Die Erfindung betrifft eine Gassackanordnung als Teil eines Sicherheitsgurtsystems in Kraftfahrzeugen mit einem sich längs eines Gurtabschnitts eines in dem Fahrzeug befindlichen Sicherheitsgurtes als Führungsbahn aufblasenden Gassack.

Eine Gassackanordnung mit den vorgenannten Merkmalen ist für den Schultergurtabschnitt eines Sicherheitsgurtsystems in der EP 0 592 815 B1 beschrieben. Hierbei ist ein V-förmig ausgebildeter Gassack mit einer Kopfabstützfläche und einer Schulterabstützfläche mit dem oberen Umlenkbeschlag eines fahrzeugseitigen Dreipunkt-Sicherheitsgurtes derart fest verbunden, daß sich der Gassack bei seiner Auslösung von dem Umlenkbeschlag weg aufbläst. Die Schulterabstützfläche ist mit einer den vom Umlenkbeschlag abgehenden Schultergurtabschnitt umgreifenden Lasche auf dem Schultergurtabschnitt geführt, so daß der Gassack bei seiner Entfaltung an dem Schultergurtabschnitt entlang gleiten soll.

Mit der bekannten Gassackanordnung ist der Nachteil verbunden, daß die Führung des sich aufblasenden Gassackes auf dem Gurtabschnitt unzureichend sein kann, so daß der Gassack für die Erfüllung seiner Schutzfunktion nicht hinreichend genau positioniert ist.

Der Erfindung liegt daher die Aufgabe zugrunde, bei einer Gassackanordnung mit den gattungsgemäßen Merkmalen die Führung des Gassackes bei seiner Entfaltung auf dem zugeordneten Gurtabschnitt sowie die Positionierung des Gassackes zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß der Gassack den Gurtabschnitt ringförmig umschließt und der zwischen einer Innenlage und einer Außenlage des Gassackes gebildete Gassackmund an einen Aufblasöffnungen aufweisenden Diffusor angeschlossen ist, so daß bei aufgeblasenem Gassack der Gurtabschnitt in einem von der Innenlage des Gassackes umschlossenen Tunnel verläuft, und daß an dem Diffusor wenigstens eine zusätzliche Einblasöffnung zum Einblasen von Gas in den Tunnel ausgebildet ist.

Mit der Erfindung ist zunächst der Vorteil verbunden, daß aufgrund der den zugeordneten Gurtabschnitt ringförmig umschließenden Ausbildung des Gassackes sich eine dem Gurtverlauf folgende Gassackröhre ergibt, die sozusagen das Volumen des Gurtabschnitts des Sicherheitsgurtsystems vergrößert und für einen sicheren Aufprallschutz des Fahrzeuginsassen hinsichtlich bei einem Unfallgeschehen intrudierender Fahrzeugstrukturen sorgt. Da bei dem ringförmigen Einschluß des Gurtbandes in dem vom Gassack ausgebildeten Tunnel der Effekt auftreten kann, daß beim Aufblasen des Gassackes die den Tunnel ausbildende Innenlage des Gassackes gegen das Gurtband gepreßt und dadurch die Reibung zwischen Gassackgewebe und Gurtbandgewebe derart erhöht wird, daß die Entfaltung des Gassackes sich nicht wie gewünscht vollzieht, sieht die Erfindung als weiteres Merkmal vor, daß an dem Diffusor wenigstens eine zusätzliche Einblasöffnung zum Einblasen von Gas in den Gewebetunnel ausgebildet ist. Damit wird in dem Tunnel kurzzeitig ein Luftpolster erzeugt, auf welchem die Innenlage des Gassackes bei dessen Entfaltung entlanggleiten kann, ohne an dem Gurtband in eine reibungserhöhende Anlage zu kommen. Im Anschluß an den Aufblasvorgang wird der Gassack dann durch die gegen das Gurtband anliegenden und das Gurtband zwischen sich einpressenden Innenlagen des Gassackes fixiert.

Ein an einem Gurtbandabschnitt bei seiner Entfaltung geführter schlauchförmiger Gassack ist aus der DE 197 24 191 A1 bekannt. Hierbei erstreckt sich der schlauchförmige Gassack jedoch außerhalb des Gurtbandes und wird an diesem über das Gurtband einfassende Gestaltungen in unterschiedlichen Ausführungsformen bei seiner Entfaltung geführt.

Nach einem Ausführungsbeispiel der Erfindung ist vorgesehen, daß an der Oberseite und an der Unterseite des Gurtbandes des Gurtabschnitts jeweils eine Einblasöffnung angeordnet ist. Hierdurch wird die sichere Positionierung des Gassackes auf den Gurtabschnitt gewährleistet.

Zweckmäßig kann sein, wenn die Einblasöffnung aus einem sich parallel zur Gurtbandbreite erstreckenden Schlitz besteht, wobei die Breite des Schlitzes zweckmäßig in etwa gleich der Breite des Gurtbandes ist.

Nach einem Ausführungsbeispiel der Erfindung ist hinsichtlich der Ausgestaltung des Diffusors vorgesehen, daß der Diffusor einen Gasverteilungsblock mit einem in Richtung des Gurtabschnitts vorspringenden Ansatz aufweist, wobei die Durchführung für das Gurtband sowie die Einblasöffnung in dem Ansatz und die Aufblasöffnungen in dem den Ansatz außen umschließenden Stirnbereich des Gasverteilungsblocks ausgebildet sind, und daß die Innenlage des Gassackes den Außenumfang des Ansatzes umschließend und die Außenlage des Gassackes den Außenumfang des Gasverteilungsblockes umschließend angeordnet und jeweils daran festgelegt sind.

Wie an sich aus der gattungsbildenden EP 0 592 815 B1 bekannt, kann der Schultergurtabschnitt des Sicherheitsgurtsystems als Führung für den sich entfaltenden Gassack herangezogen und insoweit von dem an den Diffusor angeschlossenen Gassack umschlossen sein. Hierbei kann der Diffusor als Befestigungs- oder Umlenkbeschlag für das Sicherheitsgurtsystem mit dem durch den Beschlag geführten Schultergurtabschnitt ausgebildet sein.

In einer alternativen Ausführungsform der Erfindung kann vorgesehen sein, daß der einem Endbeschlag benachbarte Beckengurtabschnitt des Sicherheitsgurtsystems von dem an den Diffusor angeschlossenen Gassack umschlossen ist, wobei entsprechend der Diffusor als Endbeschlag für den Beckengurt des Sicherheitsgurtsystems mit dem durch den Beschlag geführten Beckengurtabschnitt ausgebildet sein kann.

In der Zeichnung ist ein Ausführungsbeispiel der Erfindung wiedergegeben, welches nachstehend beschrieben ist. Es zeigen:
- Fig. 1: das Sicherheitsgurtsystem mit einer dem Schultergurtabschnitt zugeordneten Kopfschutzvorrichtung;
- Fig. 2: einen als Umlenkbeschlag ausgebildeten Diffusor mit Gurtbanddurchführung und aufgeblasenem Gassack in einer schematisierten Seitenansicht,
- Fig. 3: den Gegenstand der Figur 2 mit teilgefaltetem Gassack,
- Fig. 4: einen Diffusor mit Gassackanschluß und Gurtbanddurchführung in einer Stirnansicht,
- Fig. 5: den Diffusor gemäß Figur 2 in einer geschnittenen Seitenansicht.

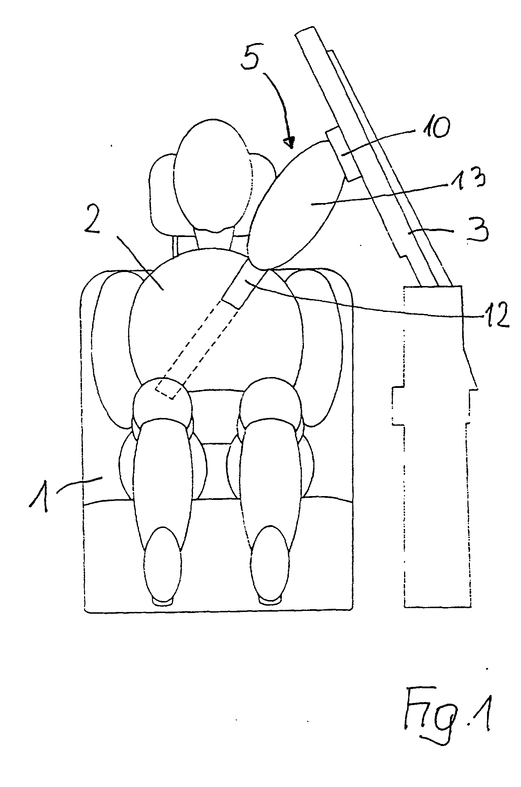

Die Erfindung wird nachstehend anhand eines der gattungsbildenden EP 0 592 815 B1 entsprechenden Ausführungsbeispiels beschrieben, bei welchem der sich entfaltende Gassack im Bereich des Schultergurtabschnitts des Sicherheitsgurtsystems angeordnet ist und hier eine Kopfschutzvorrichtung ausbildet. Insofern ist in Figur 1 zunächst die schematische Anordnung einer Kopfschutzvorrichtung mit einem auf den Schultergurtabschnitt eines Sicherheitsgurtsystems beim Aufblasen sich positionierenden Gassackes dargestellt. Dabei ist mit 1 ein Fahrzeugsitz bezeichnet, auf dem ein Fahrzeuginsasse 2 sitzend dargestellt ist. Von dem den Fahrzeuginsassen 2 auf dem Sitz 1 rückhaltenden Sicherheitsgurtsystem ist lediglich der Schultergurtabschnitt 12 dargestellt, der an einem an der B-Säule 3 des Kraftfahrzeuges angebrachten Befestigungsoder Umlenkbeschlag 10 gehalten ist. In dem an den Befestigungs- oder Umlenkbeschlag 10 angrenzenden Bereich des Schultergurtabschnitts 12 ist eine Kopfschutzvorrichtung 5 angeordnet, die aus einem aufblasbaren Gassack 13 besteht.

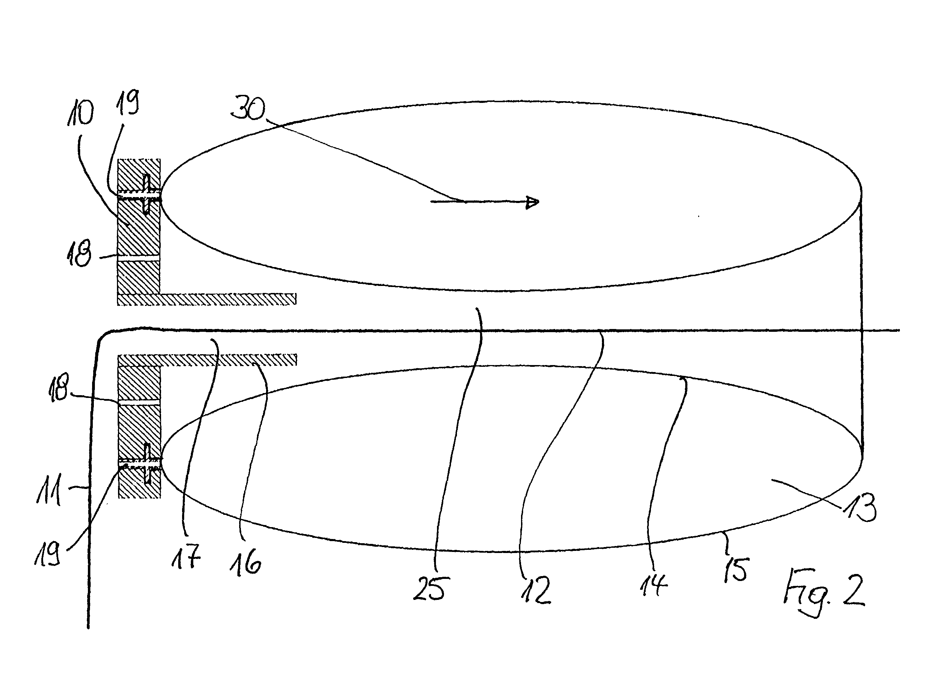

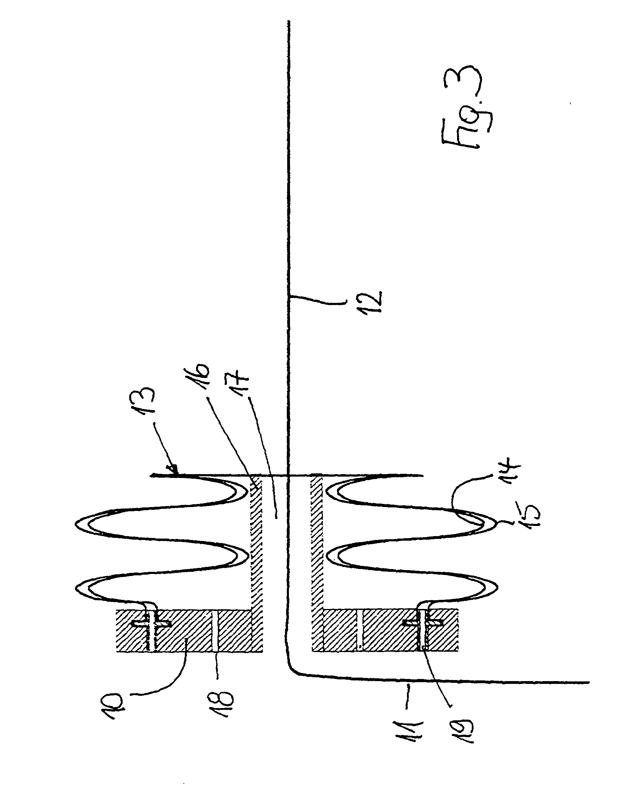

Wie den Figuren 2 und 3 im einzelnen zu entnehmen ist, ist der Befestigungs- oder Umlenkbeschlag 10 als ein an eine nicht weiter dargestellte Gasversorgung angeschlossener Diffusor ausgebildet. Das mit 11 bezeichnete Gurtband ist durch eine in dem Diffusor bzw. dem Umlenkbeschlag 10 vorgesehene Gurtbanddurchführung 17 geführt und verläßt den Diffusor bzw. Umlenkbeschlag 10 als Schultergurtabschnitt 12.

An dem Diffusor bzw. dem Umlenkbeschlag 10 ist ein Gassack 13 angeschlossen, der sich bei seiner Entfaltung in Richtung des Pfeiles 30 ausbreitet und dabei längs des Schultergurtabschnitts 12 einen entsprechenden Aufprallkörper als Kopfschutzvorrichtung ausbildet. Der Diffusor bzw. Umlenkbeschlag 10 bildet einen in Richtung des Schultergurtabschnitts 12 vorspringenden Ansatz 16 aus, in welchem die Gurtbanddurchführung 17 ausgebildet ist. Wie den Figuren 2 und 3 zu entnehmen ist, umschließt der Gassack 13 den Schultergurtabschnitt 12 ringförmig, und zur Ausbildung dieser Gestaltung wird der Gassack mit zwei unterschiedliche Durchmesser aufweisenden Lagen 14, 15 gefertigt. Hierbei wird zunächst die einen kleineren Durchmesser aufweisende Innenlage 14 des Gassackes auf der dem Ansatz 16 zugewandten Seite einer Aufblasöffnung 19 oder auch auf dem Ansatz 16 des Diffusors bzw. Umlenkbeschlages 10 befestigt. Anschließend wird die einen größeren Querschnitt aufweisende Außenlage 15 über die Innenlage 14 gestülpt und im Bereich des äußeren Umfanges des Diffusors bzw. Umlenkbeschlages 10 ebenfalls befestigt. Aufgrund dieser Anordnung bildet sich ein den Schultergurtabschnitt 12 ringförmig umschließender Gassack nach Art eines Hohlzylinders, der einen inneren Tunnel 25 ausbildet, durch den der Schultergurtabschnitt 12 verläuft.

In dem Diffusor bzw. Umlenkbeschlag 10 befinden sich Aufblasöffnungen 19, die zwischen der Innenlage 14 und der Außenlage 15 des Gassackes 13 angeordnet sind und somit für ein Aufblasen des Hohlzylinder-Gassackes sorgen. Bei dem in den Figuren 2 und 3 dargestellten Ausführungsbeispiel sind in dem Diffusor bzw. Umlenkbeschlag 10 in dem von der Innenlage 14 des Gassackes 13 umschlossenen Bereich zwei in den Tunnel 25 führende Einblasöffnungen 18 angeordnet, die ebenfalls an die Gasversorgung angeschlossen sind, so daß das aus den Einblasöffnungen 18 ausströmende Gas im Bereich des Tunnels 25 einen Gasfilm längs des Schultergurtabschnitts 12 bewirkt.

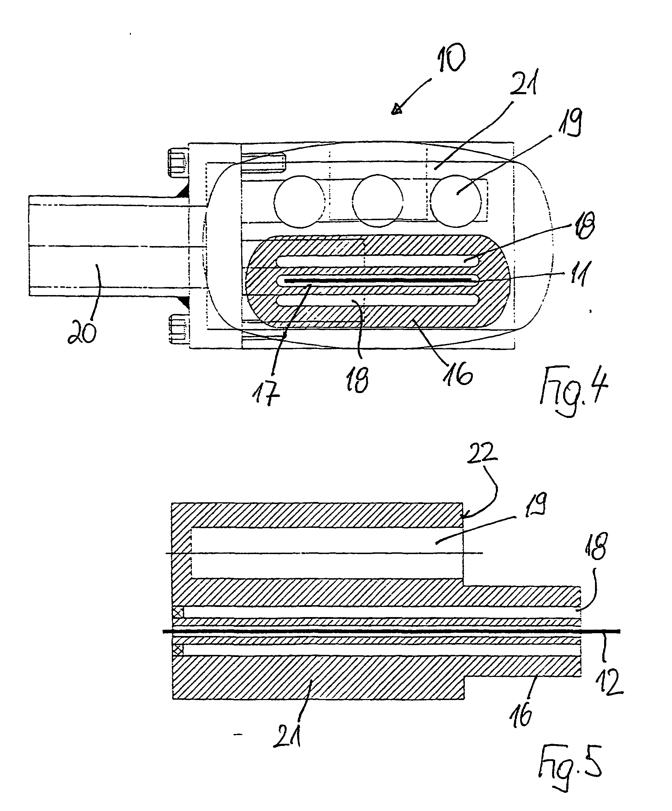

Wie sich aus den Figuren 4 und 5 ergibt, kann der als Diffusor ausgebildete Umlenkbeschlag 10 konstruktiv in einer Weise ausgebildet sein, daß ein Gasverteilungsblock 21 ausgebildet ist, der einen Anschlußstutzen 20 für die Gasversorgung aufweist. In der unteren Hälfte des Gasverteilungsblocks 21 ist der Ansatz 16 mit der Durchführung 17 für das Gurtband 11 ausgebildet, wobei in dem oberen Bereich des Gasverteilungsblocks 21 drei Aufblasöffnungen 19 angeordnet sind, über die das Aufblasen des in den Figuren 4 und 5 nicht dargestellten Gassackes erfolgt. Dabei ist die Innenlage 14 des Gassackes über den Ansatz 16 gezogen und an dem Ansatz 16 festgelegt, wobei die Außenlage 15 des eingestülpten Gassackes auf dem äußeren Umfang des Gasverteilungsblockes 21 festgelegt ist, so daß die Aufblasöffnungen 19 in dem zwischen Innenlage 14 und Außenlage 15 des Gassackes gelegenen Stirnbereich 22 des Gasverteilungsblockes 21 angeordnet sind und somit bei Auslösung der Gasversorgung das Gas in den Gassack 13 einströmen lassen.

Bei dem in den Figuren 4 und 5 dargestellten Ausführungsbeispiel sind die schlitzartig mit einer der Breite des Gurtbandes 11 in etwa entsprechenden Breite ausgeführten Einblasöffnungen 18 in dem Ansatz 16 des Diffusors bzw. Umlenkbeschlages 10 ausgebildet, wobei auf der oberen wie auch auf der unteren Seite des durch den Ansatz 16 geführten Gurtbandes 11 je eine Einblasöffnung 18 angeordnet ist. Die Einblasöffnungen 18 sind ebenfalls an den Anschlußstutzen 20 für die Gasversorgung angeschlossen.

Bei Auslösung strömt Gas über den Anschlußstutzen 20 in den Gasverteilungsblock 21 ein und gelangt hier sowohl zu den Aufblasöffnungen 19 als auch zu den Einblasöffnungen 18. Während der Entfaltung des Gassackes 13 durch das über die Aufblasöffnungen 19 in den Gassack 13 einströmende Gas bildet gleichzeitig der aus den Einblasöffnungen 18 in den Tunnel 25 austretende Teilgasstrom einen Gasfilm bzw. ein Gaspolster bezüglich der Oberflächen des Gurtbandes 11 aus, so daß eine reibungserhöhende Anlage der Innenlage 14 des Gassackes 13 an den Oberflächen des Gurtbandes 11 vermieden ist.

Wie nicht weiter dargestellt ist, richtet sich eine alternative Ausführungsform darauf, den einem Endbeschlag zur Befestigung des Sicherheitsgurtsystems benachbarten Beckengurtabschnitt zur Führung eines in diesem Bereich angeordneten Gassackes heranzuziehen, wobei entsprechend der Diffusor als Endbeschlag für die Halterung des Beckengurtes ausgebildet sein kann. Dieser Endbeschlag kann sowohl unmittelbar an dem Fahrzeugsitz 1 als auch an der zugeordneten Fahrzeugsäule angeordnet sein.

## Patentansprüche

1. Gassackanordnung als Teil eines Sicherheitsgurtsystems in Kraftfahrzeugen mit einem sich längs eines Gurtabschnitts (12) eines in dem Fahrzeug befindlichen Sicherheitsgurtes als Führungsbahn aufblasenden Gassack (13), **dadurch gekennzeichnet, daß** der Gassack (13) den Gurtabschnitt (12) ringförmig umschließt und der zwischen einer Innenlage (14) und einer Außenlage (15) des Gassackes (13) gebildete Gassackmund an einen Aufblasöffnungen aufweisenden Diffusor (10) angeschlossen ist, so daß bei aufgeblasenem Gassack (13) der Gurtabschnitt (12) in einem von der Innenlage (14) des Gassackes (13) umschlossenen Tunnel (25) verläuft, und daß an dem Diffusor (10) wenigstens eine zusätzliche Einblasöffnung (18) zum Einblasen von Gas in den Tunnel (25) ausgebildet ist.

2. Gassackanordnung nach Anspruch 1, **dadurch gekennzeichnet, daß** an der Oberseite und an der Unterseite des Gurtbandes (11) des Gurtabschnitts (12) jeweils eine Einblasöffnung (18) angeordnet ist.

3. Gassackanordnung nach Anspruch 1 oder 2, **dadurch gekennzeichnet, daß** die Einblasöffnung (18) aus einem sich parallel zur Gurtbandbreite erstreckenden Schlitz besteht.

4. Gassackanordnung nach Anspruch 3, **dadurch gekennzeichnet, daß** die Breite des Schlitzes (18) in etwa gleich der Breite des Gurtbandes (11) ist.

5. Gassackanordnung nach einem der Ansprüche 1 bis 4, **dadurch gekennzeichnet, daß** der Diffusor (10) einen Gasverteilungsblock (21) mit einem in Richtung des von dem Gassack (13) umschlossenen Gurtabschnitts (12) vorspringenden Ansatz (16) aufweist, wobei die Durchführung (17) für das Gurtband (11) sowie die Einblasöffnung (18) in dem Ansatz (16) und die Aufblasöffnungen (19) in dem den Ansatz (16) außen umschließenden Stirnbereich (22) des Gasverteilungsblocks (21) ausgebildet sind, und daß die Innenlage (14) des Gassackes (13) den Außenumfang des Ansatzes (16) umschließend und die Außenlage (15) des Gassackes (13) den Außenumfang des Gasverteilungsblockes (21) umschließend angeordnet und jeweils daran festgelegt sind.

6. Gassackanordnung nach einem der Ansprüche 1 bis 5, **dadurch gekennzeichnet, daß** der Schultergurtabschnitt (12) des Sicherheitsgurtsystems von dem an dem Diffusor (10) angeschlossenen Gassack (13) umschlossen ist.

7. Gassackanordnung nach Anspruch 6, **dadurch gekennzeichnet, daß** der Diffusor (10) als Befestigungsoder Umlenkbeschlag für das Sicherheitsgurtsystem mit dem durch den Beschlag geführten Schultergurtabschnitt (12) ausgebildet ist.

8. Gassackanordnung nach einem der Ansprüche 1 bis 5, **dadurch gekennzeichnet, daß** der einem Endbeschlag benachbarte Beckengurtabschnitt des Sicherheitsgurtsystems von dem an den Diffusor (10) angeschlossenen Gassack (13) umschlossen ist.

9. Gassackanordnung nach Anspruch 8, **dadurch gekennzeichnet, daß** der Diffusor (10) als Endbeschlag für den Beckengurt des Sicherheitsgurtsystems mit dem durch den Beschlag geführten Beckengurtabschnitt ausgebildet ist.

## Claims

1. A gasbag arrangement as part of a safety belt system in motor vehicles with a gasbag (13) which inflates along a guide path in the form of a portion (12) of a safety belt present in the vehicle, **characterised in that** the gasbag (13) surrounds the belt portion (12) in the form of a ring and the gasbag orifice formed between an inner layer (14) and an outer layer (15) of the gasbag (13) is connected to a diffuser (10) formed with inflation openings so that when the gasbag (13) is inflated the belt portion (12) extends in a tunnel (25) surrounded by the inner layer (14) of the gasbag (13), and **in that** at least one additional injection opening (18) for the injection of gas into the tunnel (25) is formed on the diffuser (10).

2. A gasbag arrangement according to claim 1, **characterised in that** an injection opening (18) is disposed at the top and at the bottom respectively of the strap (11) of the belt portion (12).

3. A gasbag arrangement according to claim 1 or 2, **characterised in that** the injection opening (18) consists of a slot extending parallel to the belt strap width.

4. A gasbag arrangement according to claim 3, **characterised in that** the width of the slot (18) is substantially equal to the width of the belt strap (11).

5. A gasbag arrangement according to any one of claims 1 to 4, **characterised in that** the diffuser (10) comprises a gas distribution block (21) with a projection (16) extending in the direction of the belt portion (12) surrounded by the gasbag (13), the passage guide (17) for the belt strap (11) and the injection opening (18) being formed in the projection (16) and the inflation openings (19) being formed in the gas distribution block (21) in the end face zone (22) thereof which externally surrounds the projection (16), and **in that** the inner layer (14) of the gasbag (13) is disposed so as to surround the outer periphery of the projection (16) and the outer layer (15) of the gasbag (15) is disposed so as to surround the outer periphery of the gas distribution block (21) and are respectively fixed thereon.

6. A gasbag arrangement according to any one of claims 1 to 5, **characterised in that** the shoulder belt portion (12) of the safety belt system is surrounded by the gasbag (13) connected to the diffuser (10).

7. A gasbag arrangement according to claim 6, **characterised in that** the diffuser (10) is constructed as a fixing or reversal fitting for the safety belt system with the shoulder belt portion (12) passing through the fitting.

8. A gasbag arrangement according to any one of claims 1 to 5, **characterised in that** the lap belt portion of the safety belt system adjacent an end fitting is surrounded by the gasbag (13) connected to the diffuser (10).

9. A gasbag arrangement according to claim 8, **characterised in that** the diffuser (10) is constructed as an end fitting for the lap belt of the safety belt system with the lap belt portion passing through the fitting.

## Revendications

1. Dispositif formant coussin de sécurité gonflable, faisant partie d'un système de ceinture de sécurité pour véhicules, comprenant un coussin de sécurité gonflable (13) se gonflant le long d'une section (12) d'une ceinture de sécurité montée dans le véhicule, tenant lieu de bande de guidage, **caractérisé en ce que** le coussin de sécurité gonflable (13) entoure la section de ceinture (12) à la manière d'un anneau, et **en ce que** l'ouverture du coussin de sécurité gonflable qui est formée entre une couche intérieure (14) et une couche extérieure (15) est raccordée à un diffuseur (10) présentant des orifices de gonflage, de sorte que, lorsque le coussin de sécurité (13) est gonflé, la section de ceinture (12) traverse un tunnel (25) entouré par la couche intérieure (14) du coussin de sécurité gonflable (13), et **en ce qu'**au minimum un orifice d'insufflation (18) supplémentaire est prévu sur le diffuseur (10) pour insuffler le gaz dans le tunnel (25).

2. Dispositif formant coussin de sécurité gonflable selon la revendication 1, **caractérisé en ce qu'**un orifice d'insufflation (18) est ménagé respectivement sur la face supérieure et sur la face inférieure de la sangle (11) de la section de ceinture (12).

3. Dispositif formant coussin de sécurité gonflable selon la revendication 1 ou 2, **caractérisé en ce que** l'orifice d'insufflation (18) est constitué par une fente s'étendant parallèlement à la largeur de la sangle.

4. Dispositif formant coussin de sécurité gonflable selon la revendication 3, **caractérisé en ce que** la largeur de la fente (18) est approximativement égale à la largeur de la sangle (11).

5. Dispositif formant coussin de sécurité gonflable selon l'une des revendications 1 à 4, **caractérisé en ce que** le diffuseur (10) présente un bloc de répartition du gaz (21) doté d'un appendice (16) qui dépasse en direction de la section de ceinture (12) qui est entourée par le coussin de sécurité gonflable (13), le passage (17) destiné à la sangle (11), ainsi que l'orifice d'insufflation (18) étant ménagés dans l'appendice (16), et les orifices de gonflage (19) étant ménagés dans la zone frontale (22) du bloc de répartition du gaz (21) qui entoure l'appendice (16) par l'extérieur, et **en ce que** la couche intérieure (14) du coussin de sécurité gonflable (13) est disposée autour du pourtour extérieur de l'appendice (16), et la couche extérieure (15) du coussin de sécurité gonflable (13) est disposée autour du pourtour extérieur du bloc de répartition du gaz (21), et ces couches y sont respectivement fixées.

6. Dispositif formant coussin de sécurité gonflable selon l'une des revendications 1 à 5, **caractérisé en ce que** la section de ceinture (12) du système de ceinture de sécurité qui passe au niveau de l'épaule est entourée par le coussin de sécurité gonflable (13) qui est raccordé au diffuseur (10).

7. Dispositif formant coussin de sécurité gonflable selon la revendication 6, **caractérisé en ce que** le diffuseur (10) est conformé en ferrure de fixation ou de déviation destinée au système de ceinture de sécurité, qui comprend la section de ceinture (12) qui passe au niveau de l'épaule et à travers la ferrure.

8. Dispositif formant coussin de sécurité gonflable selon l'une des revendications 1 à 5, **caractérisé en ce que** la section abdominale de ceinture du système de ceinture de sécurité qui est voisine d'une ferrure terminale, est entourée par le coussin de sécurité gonflable (13) qui est raccordé au diffuseur (10).

9. Dispositif selon la revendication 8, **caractérisé en ce que** le diffuseur (10) est conformé en ferrure terminale destinée à la ceinture abdominale du système de ceinture de sécurité, qui comprend la section abdominale de ceinture qui passe à travers la ferrure.
